# EUROPEAN PATENT SPECIFICATION

(11) **EP 2 054 532 B1**
(45) Date of publication and mention of the grant of the patent: **30.10.2019**
(21) Application number: 07793459.4
(22) Date of filing: 10.08.2007
(51) Int. Cl.: C21B 13/14, F27B 1/20, C21B 13/00

(54) **METHOD FOR MANUFACTURING MOLTEN IRON**
VERFAHREN ZUR HERSTELLUNG VON SCHMELZFLÜSSIGEM EISEN
PROCÉDÉ DE FABRICATION DE FONTE DE FER

(30) Priority: 11.08.2006 KR 20060076147
(43) Date of publication of application: 06.05.2009
(73) Proprietor: POSCO, Nam-ku, Pohang-shi Kyungsangbuk-do 790-300 (KR)
(72) Inventor: HUR, Nam-Suk, Pohang-shi, Kyungsangbuk-do, 790-360 (KR); LEE, Hoo-Geun, Pohang-shi, Kyungsangbuk-do, 790-360 (KR); KIM, Hang-Goo, Pohang-shi, Kyungsangbuk-do, 790-360 (KR); BAE, Jin-Chan, Pohang-shi, Kyungsangbuk-do, 790-360 (KR); KIM, Hak,Dong, Seoul 135-777 (KR); SHIN, Myoung-Kyun, Pohang-shi, Kyungsangbuk-do, 790-360 (KR)
(74) Representative: Zech, Stefan Markus
(86) International application number: PCT/KR2007/003852
(87) International publication number: WO 2008/018774

(56) References cited:
- WO-A1-2005/054520
- WO-A1-2005/054520
- JP-A- 63 011 610
- KR-A- 20040 057 191
- US-A- 5 647 887
- US-A- 5 961 690
- US-A1- 2003 097 908
- US-B1- 6 171 365

## Description

### Technical Field

The present invention relates to a method for manufacturing molten iron. More specifically, the present invention relates to a method for manufacturing molten iron to reduce fine iron ores with a wide range of a grain size.

### Background Art

WO 2005/054520 A1 discloses an apparatus for manufacturing molten iron that can reduce fine iron ores with a series of fluidized-bed reactors and then compact the reduced fine iron into compacted irons. The iron and steel industry is a core industry that supplies the basic materials needed in construction and in the manufacture of automobiles, ships, home appliances, and many other products we use. It is also an industry with one of the longest histories that has progressed together with humanity. In an iron foundry, which plays a pivotal roll in the iron and steel industry, after molten iron, which is pig iron in a molten state, is produced by using iron ore and coal as raw materials, steel is produced from the molten iron and then supplied to customers.

At present, approximately 60% of the world iron production is realized by using the blast furnace process developed from the 14th century. In the blast furnace process, cokes produced by using bituminous coal and iron ore that have undergone a sintering process are charged into a blast furnace, and oxygen is supplied to the blast furnace to reduce the iron ore to iron, thereby manufacturing molten irons.

The blast furnace method, which is the most popular in plants for manufacturing molten irons, requires that raw materials have strength of at least a predetermined level and have grain sizes that can ensure permeability in the furnace, taking into account reaction characteristics. For that reason, cokes that are obtained by processing specific raw coals are needed as carbon sources to be used as a fuel and as a reducing agent. Also, sintered ores that have gone through a successive agglomerating process are needed as iron sources.

Accordingly, the modern blast furnace method requires raw material preliminary processing equipment such as cokes manufacturing equipment and sintering equipment. Namely, it is necessary to be equipped with subsidiary facilities in addition to the blast furnace, and to also have equipment for preventing and minimizing pollution generated by the subsidiary facilities. Therefore, a heavy investment in the additional facilities and equipment leads to increased manufacturing costs.

In order to solve these problems of the blast furnace method, much research is being conducted into a smelting reduction process for manufacturing molten iron in many countries. In the reduction smelting process, molten iron is manufactured in a melter-gasifier by directly using general coal as a fuel and a reducing agent and iron ore as an iron source.

Since a coal packed-bed of coals is formed in the melter-gasifier, materials including irons and additivies are melted and slagged in the coal packed-bed, thereby being discharged as molten irons and slags. Oxygen is injected into the melter-gasifier through a plurality of tuyeres installed in an outer wall, thereby combusting a coal-packed bed in the melter-gasifier. The oxygen is converted into a hot reducing gas and is transferred to the reduction reactor. Then, the hot reducing gas reduces and plasticizes iron ores and additives, and is discharged to the outside.

A packed-bed reduction reactor or a fluidized-bed reduction reactor is usd as a reduction reactor. In the packed-bed reduction reactor, ores contact with a reducing gas rising through cavities formed between ore layers amd then ore layers are reduced while the ore layers move downward. Therefore, in the packed-bed reduction reactor, ventilation in the ores is required to obtain in order for a reducing gas to uniformly flow in the ore layers. For this, the iron ores are limited to have a predetermined size within a range of the resources, in the packed-bed reduction reactor. However, since the iron ores are reduced to be differentiate in the packed-bed reduction reactor, particle ratio in the funace is increased. As a result, a ventilation is deteriorated, thereby a reducing gas flow in the ore layers is ununiformly formed. Consequently, it is impossible to supply the reducing gas, thereby causing a process to be stopped.

Meanwhile, fine iron ores are reduced to be fluidized using a reducing gas with a high velocity in the fluidized-bed reduction reactor. The fine iron ores should be reduced with a predetermined level of a reducing ratio in order to minimize a fuel ratio in the melter-gasifier. For this, a reducing gas with a low oxidization degree is supplied to the fluidized-bed reduction reactor.

A velocity of the reducing gas in the fluidizd-bed reduction reactor should be controlled in order to form a uniform fluidized-bed layer in the fluidizd-bed reduction reactor, thereby it is difficult to manage operation. There is a problem in that fine iron ores are scattered outside with a reducing gas of high velocity. Meanwhile, fluidized-bed layers are collapsed in the fluidizd-bed reduction reactor with a reducing gas of low velocity. Furthermore, if the collapsed fluidized-bed layers are maintained in a long time, it is impossible to operate since the fine iron ores are melted to be bonded with each other. Therefore, if the iron ores with a wide range of a size are reduced in the fluidized-bed reduction reactor, it is more difficult to operate since it is difficult to form a uniform fluidized layer in the fludizied-bed reduction reactor. That is, if the iron ores with a wide range of a size are fluidized to be reduced, a severe load is applied to the fluidized-bed reduction reactor, thereby an operation is further complexed and become difficult.

Korean Patent Application Publication No. 2001-0065011 discloses an apparatus for manufacturing molten irons simultaneously using the above-mentioned packed-bed reduction reactor and the fluidized-bed reduction reactor. In this apparatus for manufacturing molten irons, a packed-bed reduction reactor is simply combined with a fluidized-bed reduction reactor depending on a size of the iron ores based on the melter-gasifier. Here, firstly, iron ores are classified into fine iron ores and coarse iron ores based on a size of the iron ores. After the fine iron ores are reduced in the fluidized-bed reduction reactor, they are supplied to the melter-gasifier as a state of fine materials without going through compacting process. After the coarse iron ores are reduced in the packed-bed reduction reactor, they are supplied to the melter-gasifier. Therefore, problem of using the above-mentioned packed-bed reduction reactor and the fluidized-bed reduction reactor are still accompanied.

### Disclosure of Invention

### Technical Problem

In order to solve the above described problems, a method for manufacturing molten iron is provided to be capable of reducing and melting iron ores with a wide range of a size and then manufacturing molten iron.

### Technical Solution

A method for manufacturing molten iron according to an embodiment of the present invention includes i) reducing first iron ores by charging the first iron ores into a fluidized-bed reduction reactor; ii) manufacturing compacted irons by compacting the reduced first iron ores; iii) reducing second iron ores together with the compacted irons by charging the second iron ores and the compacted irons into a packed-bed reduction reactor, a size of the second iron ores is greater than a size of the first iron ores; iv) charging the reduced compacted irons and the second iron ores into a melter-gasifier connected to the packed-bed reduction reactor; v) preparing lumped carbonaceous materials as a heating source for melting the reduced compacted irons and the second iron ores; vi) charging the lumped carbonaceous materials into the melter-gasifier and then forming a coal packed-bed; and vii) injecting oxygen through a tuyere installed in the melter-gasifier and then manufacturing molten iron from the compacted irons and the second iron ores.

The strength of the compacted irons may be greater than the strength of the second iron ores in the reducing second iron ores together with the compacted irons. The strength of the compacted irons may be equal to or greater than 200kg/cm2. The void fraction of the second iron ore may be greater than the void fraction of the compacted irons. The reducing differentiation ratio of the compacted irons may be less than the reducing differentiation ratio of the second iron ores in the reducing the second iron ores together with the compacted irons. The size of the compacted irons may be in a range from 8mm to 40mm. The size of the second iron ores may be equal to or greater than 5mm.

The manufacturing the compacted irons further may include crushing the compacted irons after compacting the first iron ores. Supplying a reducing gas generated from the coal-packed bed to at least one selected from a group of the fluidized-bed reduction reactor and the packed-bed reduction reactor may be further included. Cooling the reducing gas before supplying the reducin gas to the reduction reactor may be further included. Adding a return gas which is generated by removing carbon dioxide from an offgas discharged from the fluidized-bed reduction reactor and the packed-bed reduction reactor to the reducing gas may be further included. The reducing gas generated from the coal packed-bed may be supplied to the fluidized-bed reduction reactor and the packed-bed reduction reactor.

The return gas may include a first return gas that is supplied to the fluidized-bed reduction reactor and a second return gas that is supplied to the packed-bed reduction reactor. An amount of the first return gas may be larger than an amount of the second return gas. A temperature of the reducing gas supplied to the fluidized-bed reduction reactor may be lower than a temperature of the reducing gas supplied to the packed-bed reduction reactor. A temperature of the reducing gas supplied to the fluidized-bed reduction reactor may be equal to or higher than 700°C and is lower than 750°C. A temperature of the reducing gas supplied to the packed-bed reduction reactor may be in a range from 750°C to 800°C.

A method for manufacturing molten iron according to another embodiment of the present invention includes injecting an auxiliary fuel into the coal packed-bed through the tuyere. The auxiliary fuel may be injected into the coal packed-bed to be separated from the oxygen. The auxiliary fuel may be a fine coal which is pre-dryed to have moisture whose amount is equal to or less than 1.0wt%. The auxiliary fuel may be a fine coal and a size of the fin coal is equal to or less than 3.0mm. The auxiliary fuel may be a gas containing hydrocarbon.

A method for manufacturing molten iron according to another embodiment of the present invention includes charging pellets or sinter ores into the packed-bed redution reactor and reducing them. A reducing ratio of the first iron ores may be equal to or greater than 45% in reducing the first iron ores. A time required for reducing the compacted irons together with the second iron ores in the packed-bed reduction reactor may be longer than a time required for reducing the first iron ores in the fluidized-bed reduction reactor. An amount of the second iron ores may be equal to or less than forty percent of a sum of the first and second iron ores. A reduction ratio of the compacted irons and the second iron ores is equal to or more than seventy percent in the reducing the compacted irons and the second iron ores.

An apparatus for manufacturing molten iron according to an unclaimed embodiment of the present invention includes i) a fluidized-bed reduction reactor that reduces first iron ores; ii) a device for manufacturng compacted irons connected to the fluidized-bed reduction reactor and that compacts the reduced first iron ores and manufactures compacted irons; iii) a packed-bed reduction reactor connected to the device for manufacturing compacted irons, the packed-bed reduction reactor into which the compacted irons and second iron ores whose size is greater than a size of the first iron ores are charged and reduced together; iv) a melter-gasifier connected to the packed-bed reduction reactor, the melter-gasifer into which the second iron ores, the compacted irons and lumped cabonaceous materials are charged and that manufactures molten irons by injecting oxygen gas through a tuyere installed at a side of the melter-gasifier.

A strength of the compacted irons may be greater than a strength of the second irons ores. The strength of the compacted irons may be equal to or greater than 200kg/cm². The void fraction of the second iron ore may be greater than the void fraction of the compacted irons. The reducing differentiation ratio of the compacted irons may be less than the reducing differentiation ratio of the second iron ores in the reducing second iron ores together with the compacted irons. The size of the compacted irons is in a range from 8mm to 40mm. The size of the second iron ores may be equal to or greater than 5mm.

An apparatus for manufacturing molten iron according to an unclaimed embodiment of the present invention may further include a first reducing gas supply pipe that connects the melter-gasifier with the fluidized-bed recution reator; and a second reducing gas supply pipe that connects the melter-gasifier with the packed-bed recution reator. An apparatus for manufacturing molten iron according to an embodiment may further include a device for removing a carbon dioxide that supplies a return gas which is generated by removing carbon dioxide from an offgas discharged from the fluidized-bed reduction reactor and the packed-bed reduction reactor to the reducing gas. An apparatus for manufacturing molten iron according to an embodiment may further include an offgas cooler that cools an offgas dicharged from at least one selected from a group of the fluidized-bed reduction reactor and the packed-bed reduction reactor.

An apparatus for manufacturing molten iron according to an unclaimed embodiment of the present invention may further include first and seocnd return gas supply pipes that are connected to the device for removing a carbon dioxide; and the first return gas supply pipe is connected to the fluidized-bed reduction reactor; and the second return gas supply pipe is connected to the packed-bed reduction reactor. An amount of a return gas supplied through the first return gas supply pipe is largerthan an amount of a return gas supplied through the second return gas supply pipe. A temperature of the reducing gas supplied to the fluidized-bed reduction reactor may be lower than a temperature of the reducing gas supplied to the packed-bed reduction reactor.

The tuyere may include an oxygen injection line through which oxgen is injected; and an auxiliary fuel injection line that is spaced apart from the oxygen injection line and that injects an auxiliary fuel into the melter-gaisifer. The oxygen and the auxiliary fuel may meet with each other and then may be combusted in a raceway of the melter-gasifier; and the the oxygen is spaced apart from the tuyere. The auxiliary fuel injection line may be installed to penerate through a front end of the tuyere. The auxiliary fuel may be a gas containing hydrocarbon gas or fine carbonaceous materials

An apparatus for manufacturing molten iron according to an unclaimed embodiment of the present invention may further include a gas that cools the reducing gas before the reducing gas in the melter-gasifier is supplied to the fluidized-bed reduction reactor and the packed-bed reduction reactor. A reducing ratio of the first iron ores in the fluidized-bed reduction reactor may be equal to or greater than forty five percent. The fluidized-bed reduction reactor may include a plurality of fluidized-bed reduction reactors that are connected to each other in a a multi-stage manner.

### Advantageous Effects

In a method for manufacturing molten iron according to the present invention, scattering loss and adhesion phenomenon in the fluidized-bed reduction reactor can be prevented. Therefore, producing amount of the molten iron can be increased and sludge loss can be reduced.

The second iron ores and compacted irons are charged into the packed-bed reduction reactor and reduced together. Therefore, even if the second iron ores are differentiated by the reducing gas, suitable ventilation can be secured due to compacted irons.

In addition, an amount of the reducing gas is increased as the auxiliary fuel is injected, thereby staying time of the second iron ores ans the compacted irons in the melter-gasifier can be increased. Therefore, the second iron ores and the compacted irons can be completely reduced and then easily melted.

In addition, since a return gas generated by removing carbon dioxide from the offgas is reused as a reducing gas, an amount of the reducing gas can be effectively increased and temperature of the reducing gas can be suitably controlled.

### Brief Description of the Drawings

FIG. 1 is a schematic view of an apparatus for manufacturing molten iron according to the first exemplary embodiment of the present invention.
FIG. 2 is a schematic enlarged view of iron ore layers in the packed-bed reduction reactor of FIG. 1.
FIG. 3 is a schematic view of an apparatus for manufacturing molten iron according to the second exemplary embodiment of the present invention.
FIG. 4 schematically illustrates an enlarged IV portion of FIG. 3.
FIG. 5 is a schematic view of an apparatus for manufacturing molten iron according to the third exemplary embodiment of the present invention.
FIG. 6 is a schematic view of an apparatus for manufacturing molten iron according to the fourth exemplary embodiment of the present invention.
FIG. 7 is a schematic view of an apparatus for manufacturing molten iron according to the fifth exemplary embodiment of the present invention.

### Best Mode for Carrying Out the Invention

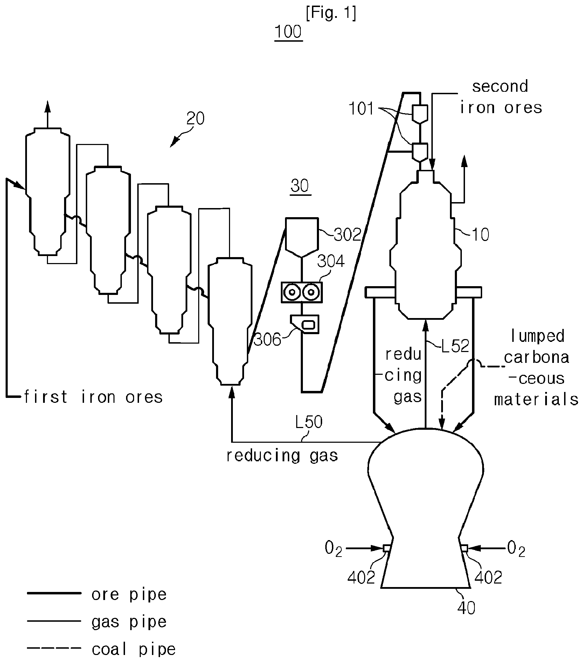

Exemplary embodiments of the present invention will be explained below with reference to FIGs. 1 to 7. The exemplary embodiments are merely to illustrate the present invention and the present invention is not limited thereto.

FIG. 1 schematically illustrates an apparatus for manufacturing molten iron 100 according to the first exemplary embodiment of the present invention. The apparatus for manufacturing molten iron 100 illustrated in FIG. 1 is merely to illustrate the present invention and the present invention is not limited thereto. Therefore, a structure of the apparatus for manufacturing molten iron 100 can be modified to other forms.

In FIG. 1, an ore pipe through which iron ores are passed is indicated by a solid line for convenience and a gas pipe through which a gas is passed is indicated by a thin line. In addition, a coal pipe through which coals are passed is indicated by a dotted line.

In FIG. 1, although the reducing gas is illustrated to be supplied to the fluidized-bed reduction rector 20 and the packed-bed reduction reactor 10 from the melter-gasifier 40, this is merely to illustrate the present invention and the present invention is not limited thereto.

In the apparatus for manufacturing molten iron 100 illustrated in FIG. 1, molten iron can be manufactured by using fine iron ores. The lumped carbonaceous materials are used for manufacturing molten iron. Coals with a big size or coal briquttes are used as lumped carbonaceous materials. The reduce iron ores are charged into the melter-gasifier 40 while the lumped carbonaceous materials are charged into the melter-gasifier 40, thereby molten iron can be manufactured.

The apparatus for manufacturing molten iron includes the packed-bed reduction reactor 10, the fluidized-bed reduction reactor 20, the device for manufacturing compacted irons 30, and the melter-gasifier 40. Besides, other equipments can be further included if necessary.

Two kinds of iron ores can be used in the apparatus for manufacturing molten iron 100 can be used. Two kinds of iron ores are classified and to be referred to as first and second iron ores. A size of the second iron ores is greater than a size of the first iron ores. The first iron ores are fluidized while passing through the fluidized-bed reduction reactor 20. If a size of the iron ores is big and a flow velocity of the reducing gas in the fluidized-bed reduction reactor 20, the first iron ores are not fluidized well in the fluidized-bed reduction reactor. Therefore, the first iron ores can be fallen at a bottom of the fluidized-bed reduction reactor 20, thereby becoming aggregates. The first iron ores should have a size capable of not scattering and remaining in the fluidized-bed reduction reactor 20. After the first iron ores are reduced in the fluidized-bed reduction reactor 20, they are compacted in the device for manufacturing compacted irons 30. Next, the first iron ores are charged into the packed-bed reduction reactor 10 and then further reduced.

Meanwhile, the second iron ores are charged into the packed-bed reduction reactor 10 with the compacted irons (reduced materials of the first iron ores) which were compacted in the device for manufacturing compacted irons 30. The second iron ores and compacted irons reduced in the packed-bed reduction reactor 10 are charged into the melter-gasifier 40 and then melted. A size of the second iron ores charged into the packed-bed reduction reactor 10 is determined to be based on a condition in a range that deterioration of ventilation is not over an operation limit. For example, a size of the second iron ores can be equal to or greater than 5mm. If a size of the second iron ores is less than 5mm, a cavity for passing the reducing gas rising from a lower portion of the packed-bed reduction reactor 10 is too small when the second iron ores are charged thereinto. Therefore, a flow of the reducing gas is blocked and then an operation is unstable. Pellets or sintered ores can be charged into the packed-bed reduction reactor 10 beside the second iron ores. Therefore, an operation using the apparatus for manufacturing molten iron 100 can be more stabilized.

Each of the devices included in the apparatus for manufacturing molten iron 100 is explained hereinafter. A structure of the device explained below is merely to illustrate the present invention and the present invention is not limited thereto.

A plurality of fluidized-bed reduction reactors 20 are connected to each other in a multi-stage manner. In FIG. 1, fluidized-bed reduction reactors 20 with four steps are illustrated, this is merely to illustrate the present invention and the present invention is not limited thereto. Therefore, the number of the fluidized-bed reduction reactors 20 can be varied. The first iron ores charged into the fluidized-bed reduction reactors 20 are reduced while passing through the fluidized-bed reduction reactors 20. Additives can be charged into the fluidized-bed reduction reactors 20 with the first iron ores if necessary. Reducing gas generated in the melter-gasifier 40 sequently passes through the multi-staged fluidized-bed reduction reactors 20 and then discharged to outside. The first iron ores charged into the fluidized-bed reduction reactors 20 are preheated, pre-reduced, finally reduced and then supplied to the device for manufacturing compacted irons 30. After the first iron ores are reduced in fluidized-bed reduction reactors 20, they are reduced again in the packed-bed reduction reactor 10. Therefore, the reducing ratio in the fluidized-bed reduction reactors 20 is not necessary to be high.

Meanwhile, the reducing ratio of the first iron ores in the fluidized-bed reduction reactors 20 may be minimized enough to compact the first iron ores in the device for manufacturing compacted irons 30. For example, if the reducing ratio of the first iron ores is less than 45 percent in the fluidized-bed reduction reactors 20, it is difficult to compact the first iron ores in the device for manufacturing compacted irons 30. This is because an amount of pure irons, which can function as a binder during pressing, is too less. As a result, the first iron ores are not compacted well and then are easily broken. Therefore, a reducing ratio of the first iron ors in the fluidized-bed reduction reactor 20 can be equal to or more than 45%. A detailed structure of the fluidized-bed reduction reactor 20 can be easily understood by the skilled art, detailed description thereof is omitted.

The first iron ores passed through the fluidized-bed reduction reactors 20 are compacted in the device for manufacturing compacted irons 30. The device for manufacturing compacted irons 30 is connected to the fluidized-bed reduction reactor 20. The device for manufacturing compacted irons 30 includes a hopper 302, a pair of rolls 304, and a crusher 306. Other devices can be further included if necessary.

The device for manufacturing compacted irons 30 presses reduced first iron ores by using a pair of rolls 204 and then manufactures long-connected compacted irons. The compacted irons are crushed by the crusher 206 and then are transferred to a hot pressure equalizing device 101. The compacted irons can be manufactured to have a compressive strength of equal to or more than 200kg/cm² in order to be differentiated in the packed-bed reduction reactor 10. A detailed structure of the device for manufacturing compacted irons 30 can be easily understood by the skilled art, detailed description thereof is omitted.

The compacted iron manufactured in the device for manufacturing compacted irons 30 are charged into the packed-bed reduction reactor 10 through the hot pressure equalizing device 101. The second iron ores are also charged into the packed-bed reduction reactor 10. The second iron ores and the compacted irons can be simultaneously charged into the packed-bed reduction reactor 10 or alternately charged thereinto.

The second iron ores and the compacted irons, which are charged into the packed-bed reduction reactor 10, are reduced together with a sufficient time. A time required for reducing the compacted irons together with the second iron ores in the packed-bed reduction reactor 10 can be longer than that required for reducing the first iron ores in the fluidized-bed reduction reactor 20. Therefore, the compacted irons and the second iron ores are reduced with a reducing ratio of equal to or more than 70%, thereby a fuel ratio of the melter-gasifier 40 can be minimized.

The compacted irons and the second iron ores are reduced in the packed-bed reduction reactor 10, an amount of the second iron ores is equal to or less than forty percent of a sum of the first and second iron ores. As such, amounts of the first and second iron ores are controlled to optimize a process for manufacturing molten iron. If an amount of unreduced second iron ores is over forty percent, ventilation can be deteriorated due to a reducing differentiation in the packed-bed reduction reactor. In addition, a reducing ratio in the packed-bed reduction reactor can be lowered.

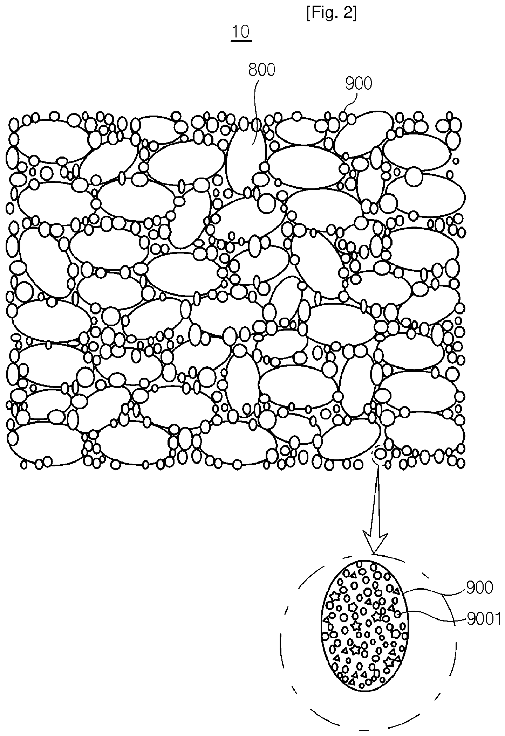

A detailed structure of the packed-bed reduction reactor 10 can be easily understood by the skilled art, detailed description thereof is omitted. Reducing mechanism of the packed-bed reduction reactor 10 will be described in detail with reference to FIG. 2.

The second iron ores and compacted irons, which were reduced in the packed-bed reduction reactor 10, are charged into the melter-gasifier 40. Meanwhile, lumped carbonaceous materials containing volatile matters as a heating source for melting the second iron ores and compacted irons are charged into the melter-gasifier 40. Coal briquettes or lumped coals can be used as a lumped carbonaceous material. Coal briquettes or lumped coals are charged into the melter-gasifier 40 and then forms a coal packed-bed.

The reducing gas generated by combustion of the lumped carbonaceous materials is supplied to the fluidized-bed reduction reactor 20 and the packed- bed reduction reactor 10 through a reducing gas supply pipe L50, respectively. Therefore, iron ores can be reduced by using a reducing gas in the fluidized-bed reduction reactor 20 and the coal-packed bed reduction reactor 10.

A detailed structure of the melter-gasifier 40 can be easily understood by the skilled art, detailed description thereof is omitted.

FIG. 2 illustrates an enlarged view of compacted irons 800 and the second iron ores 900 charged into the packed-bed reduction reactor 10. A mixing state of the compacted irons 800 and the second iron ores 900 illustrated in FIG. 2 are merely to illustrate the present invention and the present invention is not limited thereto.

A plurality of compacted irons 800 and a plurality of iron ores 900 are charged into the packed-bed reduction reactor 10. Since the compacted irons 800 are manually manufactured by the device for manufacturing compacted irons illustrated in FIG. 1, they have a similar size. Since the compacted irons 800 are manufactured to be crushed, they can have an irregular shape. On the contrary, since the second iron ores 900 are iron ores collected from a production place, the sizes thereof are not uniform and are various.

As illustrated in FIG. 2, since the compacted irons 800 are sufficiently big, it is easy to secure ventilation in the packed-bed reduction reactor 10. The size of the compacted irons 800 can be that of a pellet or a sintered ore. That is, a size can be in a range from 8mm to 40mm. Meanwhile, since the compacted irons 800 are not differentiated, the size can be minimized to 3mm. As described above, the size of the second iron ores 900 can be equal to or more than 5mm.

The strength of the compacted irons 800 is higher than that of the second iron ores 900. Since the second iron ores 900 are collected from a producing place and are directly used, the compressive strength thereof is low. On the contrary, the compacted irons 800 are formed to be pressed with a pressure of 200MPa by the device for manufacturing compacted irons. Therefore, the compacted irons 800 have strength of equal to or more than 200kg/cm². Since the compacted irons 800 have such strength, it is not differentiated well in the packed-bed reduction reactor 10.

The reducing gas supplied to the packed-bed reduction reactor 10 reduces the compacted irons 800 and the second iron ores 900. In this case, the second iron ores 900 are reduced by the reducing gas and are differentiated. On the contrary, since the first iron ores, that is, a resource of the compacted irons 800 have already undergone a pre-reducing process, the compacted irons are not differentiated well while being reduced by the reducing gas. Namely, the reducing differentiation ratio of the compacted irons 800 is less than that of the second iron ores 900 in a step of reducing the second iron ores 900 together with the compacted irons 800. Therefore, even if the second iron ores 900 are differentiated in the packed-bed reduction reactor 10, ventilation of the packed-bed reduction reactor 10 can be stably secured due to the compacted irons 800. This is possible since the compacted irons 800 charged with the second iron ores 900 have a low reducing differentiation ratio. As a result, since a cavity in the packed-bed reduction reactor 10 can be maintained, ventilation can be stably maintained.

As illustrated in an enlarged circle of FIG. 2, the second iron ore 900 has a plurality of voids 9001 on a surface thereof. As a result, the second iron ores 900 are reduced well. On the contrary, since the compacted irons 800 are manufactured by pressing partially reduced first iron ores, the number of the voids formed on a surface thereof are relatively little. That is, a void fraction of the second iron ores 900 is greater than that of the compacted irons 800. Therefore, the second iron ores 900 are reduced more easily than the compacted irons 800. However, since the compacted irons are reduced at a certain level, a difference between final reducing ratio of the compacted irons 800 and the second iron ores 800 is very little.

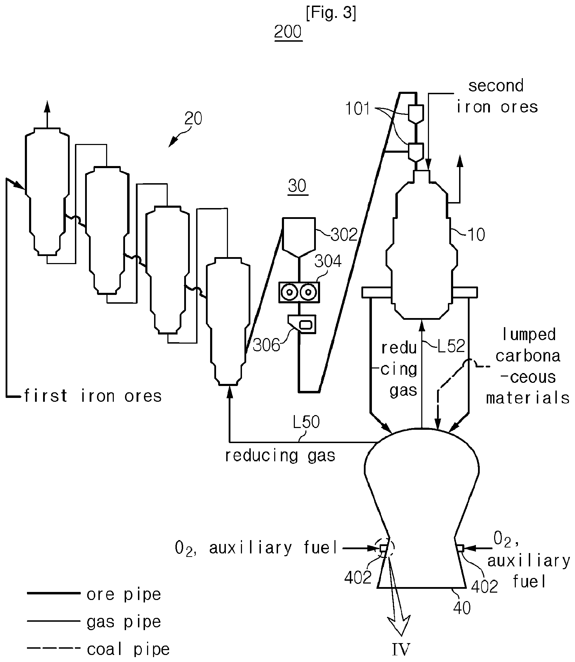

FIG. 3 illustrates an apparatus for manufacturing molten iron 200 according to a second embodiment of the present invention. A structure of the apparatus for manufacturing molten iron 200 illustrated in FIG. 3 is merely to illustrate the present invention and the present invention is not limited thereto. In addition, since a structure of the apparatus for manufacturing molten iron 200 is similar to that of the apparatus for manufacturing molten iron 200 according to a first embodiment of the present invention, like elements refer to like reference numerals and detailed description thereof is omitted.

As illustrated in FIG. 3, an auxiliary fuel can be injected into the melter-gasifier 40 with oxygen through the tuyere 402 in a second embodiment of the present invention. Liquid natural gas (LNG) can be an example of the hydrocarbon gas.

The lumped carbonaceous materials charged into the melter-gasifier 40 include volatile matters, fixed carbon and ashes. The lumped carbonaceous materials are thermally decomposed while being going down through a coal packed-bed. Most of the volatile matters contained in the lumped carbonaceous materials are converted into a gas in an upper portion of the coal packed-bed. Fixed carbons from which volatile matters were removed and ashes are only descended to a lower portion of the coal packed-bed.

Meanwhile, a tuyere 402 is installed at a side plane of the melter-gasifier 40 and in a lower portion of the coal packed-bed. The oxygen is injected into the melter-gasifier 40 through the tuyere 40. The oxygen injected through the tuyere combusts the above described fixed carbon descending to the lower portion of the coal packed-bed by the Chemical Formula 1 and then hot reducing gas is generated.

[Chemical Formula 1] C + 1/2O₂ → CO

A hot carbon monoxide rises through the coal packed-bed while transferring heat to the lumped carbonaceous materials, and compacted irons in the coal packed-bed. Therefore, a temperature of the second iron ores and the compacted irons are risen to be melted. In a temperature rising process, unreduced iron oxide (FeO) contained in the second iron ores and the compacted irons are partially reduced from the solid state by a following indirect reaction of the Chemical Formula 2.

[Chemical Formula 2] FeO + CO → Fe + CO₂

In addition, during the above melting process, unreduced iron oxides in the compacted irons and the second iron ores are finally reduced with a few fixed carbons by a direct reducing reaction of the following Chemical Formula 3.

[Chemical Formula 3] FeO + C → Fe + CO

Here, a direct reducing reaction is an exothermic reaction and a direct reducing reaction is an endothermic reaction. Therefore, it is advantageous to increase indirect reduction relative to direct reduction in the coal packed-bed in order to reduce an amount of the lumped carbonaceous materials consumed in the melter-gasifier 40. Namely, a fuel ratio can be reduced. In order to increase an indirect reduction, a falling time (staying time) of the second iron ores and the compacted irons should be increased. Furthermore, since the second iron ores and the compacted irons can be charged into the melter-gasifier 40 as a state of partially being reduced, staying time in the coal packed-bed should be increased in order to simultaneously and further reduce and melt. In addition, an amount of the hot gas combusted in the tuyere 402 and rising through the coal packed-bed should be increased.

In a second embodiment of the present invention, an auxiliary fuel is injected through the tuyere 402, thereby increasing an amount of hot gas. A portion of the lumped carbonaceous materials can be replaced by the auxiliary fuel containing volatile matters. The auxiliary fuel is combusted with oxygen which is injected toward the raceway formed to be spaced apart from the tuyere 402 thereby being converted into a hot carbon monoxide and hydrogen gases. The hot carbon monoxide and hydrogen gases rise through the coal packed-bed while reducing unreduced in the second iron ores and the compacted irons falling through the coal packed-bed by an indirect reduction reaction of the following Chemical Formula 4.

[Chemical Formula 4] 2FeO + CO + H₂ → 2Fe + CO₂ + H₂O

Therefore, most of the carbon components and hydrogen components included in the auxiliary fuel are gasified. An amount of the gas generated in the tuyere by injecting an auxiliary fuel is significantly increased relative to an amount of the gas generated by only combusting the fixed carbon in the lumped carbonaceous materials. In addition, when an auxiliary fuel is injected, the lumped carbonaceous materials charged from an upper portion of the melter-gasifier 40 are combusted in the tuyere, thereby termination velocity is reduced. Therefore, a time for the lumped carbonaceous materials, the reduced second iron ores, and compacted irons to fall through the coal packed-bed with a predetermined volume to the tuyere, namely staying time is increased.

As described above, if the auxiliary fuel is injected, amount of gas combusted in the tuyere and rising in the coal packed-bed is increased. In addition, since a staying time of the reduced second iron ores and compacted irons in the coal packed-bed, an indirect reducing ratio is increased. As a result, amount of fuel consumed in the melter-gasifier 40 can be reduced.

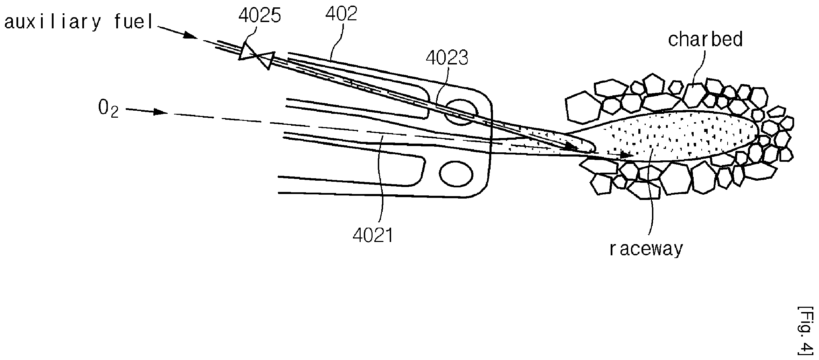

FIG. 4 schematically illustrates an internal structure of the tuyere 402 which is enlarged portion IV of FIG. 3. As illustrated in FIG. 4, the tuyere 402 includes an oxygen injection line 4021 and an auxiliary fuel injection line 4023. The oxygen injection line 4021 is formed at a center of the tuyere 402 and the auxiliary fuel injection line 4023 is spaced apart from the oxygen injection line 4021, thereby injecting auxiliary fuel into the melter-gasifier. An amount of the auxiliary fuel can be controlled by operating a valve 4025 installed at an auxiliary fuel injection line 4023. An auxiliary fuel injection line 4023 is installed to penetrate a front end of the tuyere 402.

Fine carbonaceous materials or hydrocarbon containing gas can be used as an auxiliary fuel. When fine carbonaceous materials are used as an auxiliary fuel, the fine carbonaceous materials are transferred through an auxiliary fuel injection line 4023 by air. The fine carbonaceous materials are pre-dried to have a moisture of equal to or less than 1.0% in order to prevent the fine carbonaceous materials from being adhered to an inside of the auxiliary fuel injection line 4023 and then blocking the auxiliary fuel injection line 4023. In addition, a size of the fine carbonaceous materials is controlled to be equal to or less than 3.0mm in order not to block auxiliary fuel injection line 4023.

The oxygen injection line 4021 and the auxiliary fuel injection line 4023 can be spaced apart from each other. When the auxiliary fuel and the oxygen are mixed and then are injected only through the oxygen injection line 4021, the auxiliary fuel is combusted in the oxygen injection line 4021 by a radiation heat of a hot region formed at a front end of the tuyere 402. Therefore, the oxygen injection line 4021 is melted to be damaged. For preventing this phenomenon, as illustrated in FIG. 4, oxygen and an auxiliary fuel are separately injected. In this case, the fine carbonaceous materials and the oxygen are spaced apart from each other, thereby meeting with each other at a raceway formed at a front end of the tuyere 402. The fine carbonaceous materials and the oxygen are combusted in the raceway.

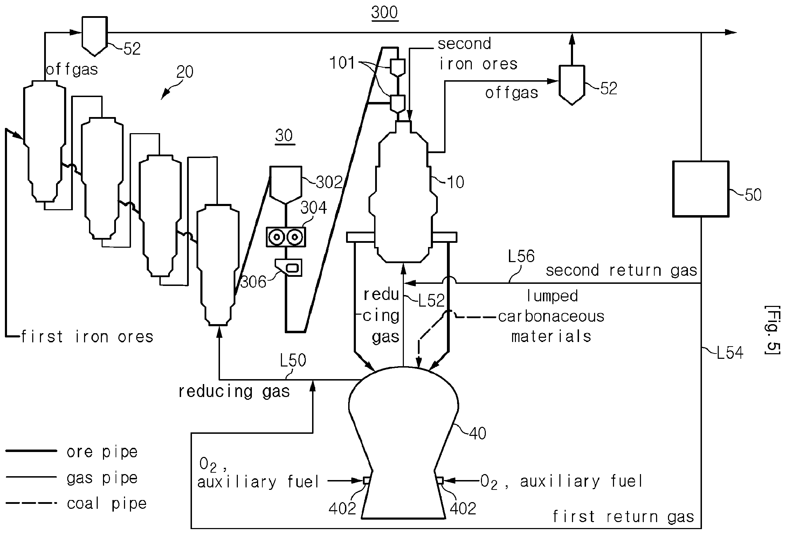

FIG. 5 illustrates an apparatus for manufacturing molten irons 300 according to a third embodiment of the present invention. A structure of the apparatus for manufacturing molten irons 300 illustrated in FIG. 5 is merely to illustrate the present invention and the present invention is not limited thereto. In addition, since a structure of the apparatus for manufacturing molten irons 300 is similar to that according to a second embodiment of the present invention, like elements refer to like reference numerals and detailed description thereof is omitted.

The reducing gas is generated by combusting the lumped carbonaceous materials and an auxiliary fuel which are supplied to the melter-gasifier 40. Therefore, an amount of the lumped carbonaceous materials charged into the melter-gasifier 40 can be reduced by injecting the auxiliary fuel. As such, as an amount of the lumped carbonaceous materials is reduced, an amount of the reducing gas generated in the melter-gasifier 40 is reduced. Such an amount of the reducing gas is less than that is necessary for reducing the iron ores in the fluidized-bed reduction reactor 20 and the packed-bed reduction reactor 10. Therefore, in the third embodiment of the present invention, a portion of an offgas discharged from the fluidized-bed reduction reactor 20 and the packed-bed reduction reactor 10 is recovered to be generated and then is re-supplied, thereby suitably maintaining amount of the reducing gas.

As illustrated in FIG. 5, the offgas discharged from the fluidized-bed reduction reactor 20 and the packed-bed reduction reactor 10 is cooled while passing through the offgas 52, and then is recovered to supply to a device for removing carbon dioxide 50. A partially cooled offgas can be discharged to the outside. The device for removing carbon dioxide 50 supplies a return gas which is generated by removing carbon dioxide from the offgas to the fluidized-bed reduction reactor 20 and the packed-bed reduction reactor 10. The carbon dioxide is removed by the using the device for removing carbon dioxide 50, thereby a reducing power of the return gas is increased. Since a detailed structure of the device for removing carbon dioxide 50 can be easily understood by the skilled art, detailed description thereof is omitted.

The return gas is mixed with the reducing gas generated from the melter-gasifier 40. As such, the reducing gas is reformed to be circulated, thereby securing an amount of the reducing gas for the fluidized-bed reduction reactor 20 and the packed-bed reduction reactor 10 irrespective of an amount of the reducing gas generated from the melter-gasifier 40. Therefore, reducing reaction can be suitably occurred in the fluidized-bed reduction reactor 20 and the packed-bed reduction reactor 10.

More specifically, a first return gas supply pipe L54 connects the device for removing carbon dioxide 50 with the fluidized-bed reduction reactor 20, thereby supplying the first return gas to the fluidized-bed reduction reactor 20. Meanwhile, a second return gas supply pipe L56 connects the device for removing carbon dioxide 50 with the packed-bed reduction reactor 10, thereby supplying the second return gas to the packed-bed reduction reactor 10.

As described above, since the return gas is divided into the first and second return gas, a temperature of the reducing gas supplied to the fluidized-bed reduction reactor 20 and a temperature of the reducing gas supplied to the packed-bed reduction reactor 10 can be controlled to be different from each other. That is, an amount of the first return gas is controlled to be more than that of the second return gas. Since a temperature of the return gas is low, a temperature of the reducing gas is lowered when the return gas is mixed with the reducing gas. Therefore, a temperature of the reducing gas supplied to the fluidized-bed reduction reactor 20 can be controlled to be lower than that of the reducing gas supplied to the packed-bed reduction reactor 10.

Since relatively little amount of the first return gas is mixed with the reducing gas supplied to the packed-bed reduction reactor 10, a temperature of the reducing gas can be maintained to be high. Therefore, a reducing velocity of the second iron ores and the compacted irons in the packed-bed reduction reactor 10 can be maximumly increased. On the other hand, since relatively large amount of the second return gas is mixed in the reducing gas supplied to the fluidized-bed reduction reactor 20, a temperature of the reducing gas can be relatively maintained to be low. Therefore, hot adhesion phenomenon of the fine iron ores in the fluidized-bed reduction reactor 20 can be prevented.

A temperature of the reducing gas supplied to the packed-bed reduction reactor 10 can be controlled in a range from 750°C to 800°C by using the above described return gas. Therefore, the second iron ores and the compacted irons can be suitably reduced. In addition, a temperature of the reducing gas supplied to the fluidized-bed reduction reactor 20 can be controlled to be equal to or higher than 700°C and be lower than 750°C. Therefore, the first iron ores are prevented from being adhered to an inside of the fluidized-bed reduction reactor 20.

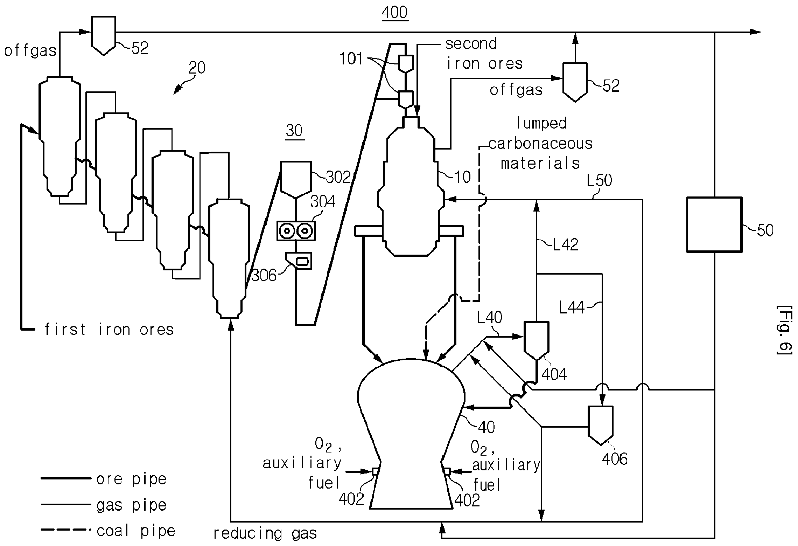

FIG. 6 illustrates an apparatus for manufacturing molten iron 400 according to a fourth embodiment of the present invention. A structure of the apparatus for manufacturing molten iron 400 illustrated in FIG. 6 is merely to illustrate the present invention and the present invention is not limited thereto. In addition, since a structure of the apparatus for manufacturing molten iron 400 is similar to that according to the third embodiment of the present invention, like elements refer to like reference numerals and detailed description thereof is omitted.

The apparatus for manufacturing molten iron 400 further includes a gas cooler 406. The gas cooler 406 branches a portion of the reducing gas generated from the melter-gasifier 40 and cools it. The gas cooler 406 mixes cooled reducing gas with the reducing gas supplied to the fluidized-bed reduction reactor 20 and the packed-bed reduction reactor 10, thereby lowering a temperature of the reducing gas supplied thereto. The temperature of the reducing gas is controlled, thereby a reducing ratio of the fluidized-bed reduction reactor 20 or the packed-bed reduction reactor 10 is controlled and the iron ores are prevented from being adhered due to thermalization. In addition, an auxiliary fuel is injected through the tuyere 402 in the apparatus for manufacturing molten iron 400 and the reducing gas can be recovered to be reused through the device for removing carbon dioxide 50, thereby an efficnency can be optimized.

After the offgas is cooled while passing through the offgas 52, it is discharged or supplied to the device for removing carbon dioxide 50. Since dusts contained in the offgas can be removed while passing through the offgas 52, blocking phenomenon caused by the dusts can be previously prevented.

A cyclone 404 is installed in the melter-gasifier 40. The cyclone 404 collects dusts scattered from the melter-gasifier 40 and returns them to the melter-gasifier 40. That is, dusts discharged through the gas pipe L40 are filtered in the cyclone 404 and are returned to the melter-gasifier 40. The reducing gas separated from the dusts is supplied to the fluidized-bed reduction reactor 20 and the packed-bed reduction reactor 10 through a reducing gas supply pipe L42.

Since the gas pipe L42 is branched, a portion of reducing gas is supplied to the gas cooler 406 through the gas pipe L44. For example, a scrubber can be used as a gas cooler 406. After the reducing gas is cooled in the gas cooler 406, it is transferred to the gas pipe L40 or a reducing gas supply pipe L50. Therefore, a temperature of the reducing gas supplied to the fluidized-bed reduction reactor 20 or the packed-bed reduction reactor 10 can be controlled by mixing the return gas supplied from the above described device for removing carbon dioxide 50 or a cooling gas supplied from the gas cooler 406 with the reducing gas generated from the melter-gasifier 40. As described above, in the third embodiment, a temperature of the reducing gas supplied to the packed-bed reduction reactor 10 can be controlled in a range from 750°C to 800°C. Therefore, the second irons ores and the compacted irons can be suitably reduced. In addition, a temperature of the reducing gas supplied to the fluidized-bed reduction reactor 20 can be controlled to be equal to or higher than 700°C and lower than 750°C. Therefore, the first iron ores can be prevented from being adhered to an inside of the fluidized-bed reduction reactor 20.

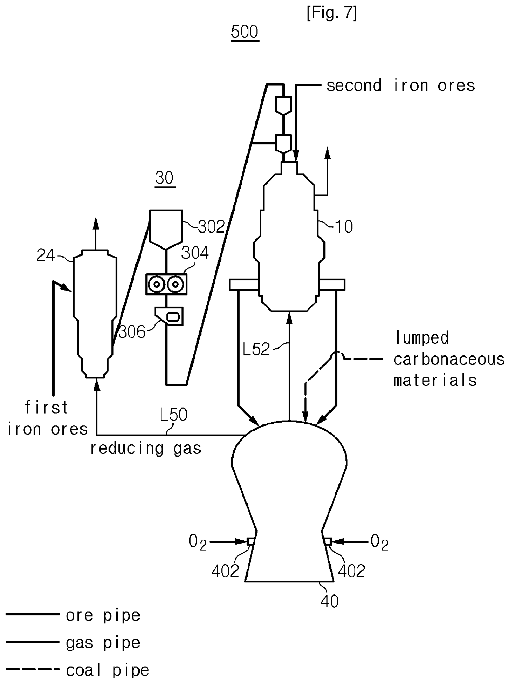

FIG. 7 illustrates an apparatus for manufacturing molten iron 500 according to a fifth embodiment of the present invention. A structure of the apparatus for manufacturing molten iron is merely to illustrate the present invention and the present invention is not limited thereto. In addition, since a structure of the apparatus for manufacturing molten iron 500 is similar to that according to a first embodiment of the present invention, like elements refer to like reference numerals and detailed description thereof is omitted.

As illustrated in FIG. 7, the first iron ores can be reduced by only using one fluidized-bed reduction reactor 24. As described above, after the first iron ores are reduced in the fluidized-bed reduction reactor 24, they are reduced in the packed-bed reduction reactor 10 again. A reducing ratio of the reduced irons charged into the melter-gasifier 40 should be equal to or more than a certain level in order to minimize a fuel ratio of the melter-gasifier 40. In the present invention, since the first iron ores are reduced twice using both of the fluidized-bed reduction reactor 24 and the packed-bed reduction reactor 10, reduction load applied to the fluidized-bed reduction reactor 24 can be significantly reduced. Therefore, even if only one fluidized-bed reduction reactor 24 is used, the first iron ores can be reduced to a desired reducing ratio. If the apparatus for manufacturing molten iron 500 is used, its structure become simplified, thereby there is an advantage that costs are largely reduced.

While the present invention has been particularly shown and described with reference to exemplary embodiments thereof, it will be understood by those skilled in the art that various changes in form and detail may be made therein without departing from the scope of the invention as defined by the appended claims.

## Claims

1. A method for manufacturing molten iron, comprising:
reducing first iron ores by charging the first iron ores into a fluidized-bed reduction reactor (20);
manufacturing compacted irons (800) by compacting the reduced first iron ores; reducing second iron ores (900) together with the compacted irons (800) by charging the second iron ores (900) and the compacted irons (800) into a packed-bed reduction reactor (10), a size of the second iron ores (900) is greater than a size of the first iron ores;
charging the reduced compacted irons (800) and the second iron ores (900) into a melter-gasifier (40) connected to the packed-bed reduction reactor (10); preparing lumped carbonaceous materials as a heating source for melting the reduced compacted irons (800) and the second iron ores (900);
charging the lumped carbonaceous materials into the melter-gasifier (40) and then forming a coal packed-bed; and
injecting oxygen through a tuyere (402) installed in the melter-gasifier (40) and then manufacturing molten iron from the compacted irons (800) and the second iron ores (900).

2. The method of Claim 1, wherein the strength of the compacted irons (800) is greater than the strength of the second iron ores (900) in the reducing second iron ores (900) together with the compacted irons (800).

3. The method of Claim 1 or 2, wherein the strength of the compacted irons (800) is equal to or greater than 200kg/cm2 and/or wherein the void fraction of the second iron ore (900) is greater than the void fraction of the compacted irons (800) and/or wherein the reducing differentiation ratio of the compacted irons (800) is less than the reducing differentiation ratio of the second iron ores (900) in the reducing the second iron ores (900) together with the compacted irons (800).

4. The method of Claims 1 to 3, wherein the size of the compacted irons (800) is in a range from 8mm to 40mm and/or wherein the size of the second iron ores (900) is equal to or greater than 5mm.

5. The method of Claims 1 to 4, wherein the manufacturing the compacted irons (800) further comprises crushing the compacted irons (800) after compacting the first iron ores.

6. The method of Claims 1 to 5, further comprising supplying a reducing gas generated from the coal-packed bed to at least one selected from a group of the fluidized-bed reduction reactor (20) and the packed-bed reduction reactor (10).

7. The method of Claim 6, further comprising cooling the reducing gas before supplying the reducing gas to the reduction reactor (10, 20).

8. The method of Claims 6 to 7, further comprising adding a return gas which is generated by removing carbon dioxide from an offgas discharged from the fluidized-bed reduction reactor (20) and the packed-bed reduction reactor (10) to the reducing gas.

9. The method of Claims 6 to 8, wherein the reducing gas generated from the coal packed-bed is supplied to the fluidized-bed reduction reactor (20) and the packed-bed reduction reactor (10).

10. The method of Claim 8 or 9, wherein the return gas comprises:
a first return gas that is supplied to the fluidized-bed reduction reactor (20); and
a second return gas that is supplied to the packed-bed reduction reactor (10).

11. The method of Claim 10, wherein an amount of the first return gas is larger than an amount of the second return gas and/or wherein a temperature of the reducing gas supplied to the fluidized-bed reduction reactor (20) is lower than a temperature of the reducing gas supplied to the packed-bed reduction reactor (10) and/or wherein a temperature of the reducing gas supplied to the fluidized-bed reduction reactor (20) is equal to or higher than 700°C and is lower than 750°C and/or wherein a temperature of the reducing gas supplied to the packed-bed reduction reactor (10) is in a range from 750°C to 800°C.

12. The method of Claims 1 to 11, further comprising injecting an auxiliary fuel into the coal packed-bed through the tuyere (402).

13. The method of Claim 12, wherein the auxiliary fuel is injected into the coal packed-bed to be separated from the oxygen and/or wherein the auxiliary fuel is a fine coal which is predryed to have moisture whose amount is equal to or less than 1.0wt% and/or wherein the auxiliary fuel is a fine coal and a size of the fine coal is equal to or less than 3.0mm and/or wherein the auxiliary fuel is a gas containing hydrocarbon.

14. The method of Claims 1 to 13, further comprising charging pellets or sinter ores into the packed-bed reduction reactor (10) and reducing them.

15. The method of Claims 1 to 14, wherein a reducing ratio of the first iron ores is equal to or greater than 45% in reducing the first iron ores and/or wherein a time required for reducing the compacted irons (800) together with the second iron ores (900) in the packed-bed reduction reactor (10) is longer than a time required for reducing the first iron ores in the fluidized-bed reduction reactor (20).

16. The method of Claims 1 to 15, wherein an amount of the second iron ores (900) is equal to or less than forty percent of a sum of the first and second iron ores (900) and/or wherein a reduction ratio of the compacted irons (800) and the second iron ores (900) is equal to or more than seventy percent in the reducing the compacted irons (800) and the second iron ores (900).

## Patentansprüche

1. Verfahren zum Herstellen von schmelzflüssigem Eisen, umfassend:
Reduzieren erster Eisenerze durch Einbringen der ersten Eisenerze in einen Fließbett-Reduktionsreaktor (20);
Herstellen kompaktierter Eisen (800) durch Kompaktieren der reduzierten ersten Eisenerze; Reduzieren zweiter Eisenerze (900) zusammen mit den kompaktierten Eisenteilen (800) durch Einbringen der zweiten Eisenerze (900) und der kompaktierten Eisen (800) in einen Festbett-Reduktionsreaktor (10), wobei eine Größe der zweiten Eisenerze (900) größer ist als eine Größe der ersten Eisenerze;
Einbringen der reduzierten, kompaktierten Eisen (800) und der zweiten Eisenerze (900) in einen Schmelzvergaser (40), der an den Festbett-Reduktionsreaktor (10) angeschlossen ist;
Vorbereiten klumpiger kohlehaltiger Materialien als Wärmequelle zum Schmelzen der reduzierten, kompaktierten Eisen (800) und der zweiten Eisenerze (900);
Einbringen der klumpigen kohlehaltigen Materialien in den Schmelzvergaser (4), und dann Ausbilden eine Kohlefestbetts; und
Einleiten von Sauerstoff durch eine im Schmelzvergaser (40) installierte Blasform (402), und dass Herstellen von schmelzflüssigem Eisen aus den kompaktierten Eisen (800) und den zweiten Eisenerzen.

2. Verfahren nach Anspruch 1, wobei die Festigkeit der kompaktierten Eisen (800) größer ist als die Festigkeit der zweiten Eisenerze (900) in den reduzierenden zweiten Eisenerzen (900) zusammen mit den kompaktierten Eisen (800).

3. Verfahren nach Anspruch 1 oder 2, wobei die Festigkeit der kompaktierten Eisen (800) gleich oder größer als 200 kg/cm² ist, und/oder wobei der Leerstellenanteil des zweiten Eisenerzes (900) größer als der Leestellenanteil der kompaktierten Eisen (800) ist, und/oder wobei das Reduzierdifferentiationsverhältnis der kompaktierten Eisen (800) kleiner ist als das Reduzierdifferentiationsverhältnis der zweiten Eisenerze (900) beim Reduzieren der zweiten Eisenerze (900) zusammen mit den kompaktierten Eisen (800).

4. Verfahren nach einem der Ansprüche 1 bis 3, wobei die Größe der kompaktierten Eisen (800) in einem Bereich von 8 mm bis 40 mm liegt, und/oder wobei die Größe der zweiten Eisenerze (900) gleich oder größer als 5 mm ist.

5. Verfahren nach einem der Ansprüche 1 bis 4, wobei das Herstellen der kompaktierten Eisen (800) darüber hinaus umfasst, die kompaktierten Eisen (800) nach dem Kompaktieren der ersten Eisenerze zu zerstoßen.

6. Verfahren nach einem der Ansprüche 1 bis 5, darüber hinaus umfassend, eine aus dem Kohlefestbett erzeugtes Reduziergas zu mindestens einer Gruppe zuzuführen, die aus einer Gruppe aus dem Fließbett-Reduktionsreaktor (20) und dem Festbett-Reduktionsreaktor (10) ausgewählt ist.

7. Verfahren nach Anspruch 6, darüber hinaus umfassend, das Reduziergas abzukühlen, bevor das Reduziergas dem Reduktionsreaktor (10, 20) zugeführt wird.

8. Verfahren nach einem der Ansprüche 6 bis 7, darüber hinaus umfassend, ein Rückführgas, das erzeugt wird, indem Kohlendioxid aus einem aus dem Fließbett-Reduktionsreaktor (20) und dem Festbett-Reduktionsreaktor (10) abgegebenen Abgas entfernt wird, dem Reduziergas zugesetzt wird.

9. Verfahren nach einem der Ansprüche 6 bis 8, wobei das aus dem Kohlefestbett erzeugte Reduziergas dem Fließbett-Reduktionsreaktor (20) und dem Festbett-Reduktionsreaktor (10) zugeführt wird.

10. Verfahren nach Anspruch 8 oder 9, wobei das Rückführgas umfasst:
ein erstes Rückführgas, das dem Fließbett-Reduktionsreaktor (20) zugeführt wird; und
ein zweites Rückführgas, das dem Festbett-Reduktionsreaktor (10) zugeführt wird.

11. Verfahren nach Anspruch 10, wobei eine Menge des ersten Rückführgases größer ist als eine Menge des zweiten Rückführgases, und/oder wobei eine Temperatur des dem Fließbett-Reduktionsreaktor (20) zugeführten Reduziergases niedriger ist als eine Temperatur des dem Festbett-Reduktionsreaktor (10) zugeführten Reduziergases, und/oder wobei eine Temperatur des dem Fließbett-Reduktionsreaktor (20) zugeführten Reduziergases gleich oder höher als 700°C und niedriger als 750°C ist, und oder wobei eine Temperatur des dem Festbett-Reduktionsreaktor (10) zugeführten Reduziergases in einem Bereich von 750°C bis 800°C liegt.

12. Verfahren nach einem der Ansprüche 1 bis 11, darüber hinaus umfassend, einen Hilfsbrennstoff durch die Blasform (402) in das Kohlefestbett einzuleiten.

13. Verfahren nach Anspruch 12, wobei der Hilfsbrennstoff getrennt vom Sauerstoff in das Kohlefestbett eingeleitet wird, und/oder wobei der Hilfsbrennstoff Feinkohle ist, die vorgetrocknet ist, um eine Feuchtigkeit zu haben, deren Menge gleich oder weniger als 1,0 Gew.-% beträgt, und/oder wobei der Hilfsbrennstoff Feinkohle ist, und eine Größe der Feinkohle gleich oder kleiner als 3,0 mm ist, und/oder wobei der Hilfsbrennstoff ein Gas ist, das Kohlenwasserstoff enthält.

14. Verfahren nach einem der Ansprüche 1 bis 13, darüber hinaus umfassend, Pellets oder Sintererze in dem Festbett-Reduktionsreaktor (10) einzubringen und sie zu reduzieren.

15. Verfahren nach einem der Ansprüche 1 bis 14, wobei ein Reduzierverhältnis der ersten Eisenerze beim Reduzieren der ersten Eisenerze gleich oder größer als 45 % ist, und/oder wobei eine Zeit, die erforderlich ist, um die kompaktierten Eisen (800) zusammen mit den zweiten Eisenerzen m Festbett-Reduktionsreaktor (10) zu reduzieren. Länger ist als eine Zeit, die erforderlich ist, um die ersten Eisenerze im Fließbett-Reduktionsreaktor (20) zu reduzieren.

16. Verfahren nach einem der Ansprüche 1 bis 15, wobei eine Menge der zweiten Eisenerze (900) gleich oder kleiner als vierzig Prozent einer Summe der ersten und zweiten Eisenerze (900) ist, und/oder wobei ein Reduktionsverhältnis der kompaktierten Eisen (800) und der zweiten Eisenerze (900) beim Reduzieren der kompaktierten Eisen (800) und der zweiten Eisenerze (9000) gleich oder mehr als siebzig Prozent ist.

## Revendications

1. Procédé de fabrication de fonte liquide, comprenant :
la réduction de premiers minerais de fer en chargeant les premiers minerais de fer dans un réacteur de réduction à lit fluidisé (20) ;
la fabrication de fers compactés (800) en compactant les premiers minerais de fer réduits ; la réduction de deuxièmes minerais de fer (900) conjointement avec les fers compactés (800) en chargeant les deuxièmes minerais de fer (900) et les fers compactés (800) dans un réacteur de réduction à lit fixe (10), une taille des deuxièmes minerais de fer (900) étant supérieure à une taille des premiers minerais de fer ;
le chargement des fers compactés (800) réduits et des deuxièmes minerais de fer (900) dans un dispositif de fusion-gazéification (40) raccordé au réacteur de réduction à lit fixe (10) ;
la préparation de matériaux carbonés agrégés comme source de chauffage pour la fusion des fers compactés (800) réduits et des deuxièmes minerais de fer (900) ;
le chargement des matériaux carbonés agrégés dans le dispositif de fusion-gazéification (40) et ensuite la formation d'un lit fixe de charbon ; et
l'injection d'oxygène via une tuyère (402) installée dans le dispositif de fusion-gazéification (40) et ensuite la fabrication de fonte liquide à partir des fers compactés (800) et des deuxièmes minerais de fer (900).

2. Procédé de la revendication 1, sachant que la solidité des fers compactés (800) est supérieure à la solidité des deuxièmes minerais de fer (900) lors de la réduction de deuxièmes minerais de fer (900) conjointement avec les fers compactés (800).

3. Procédé de la revendication 1 ou 2, sachant que la solidité des fers compactés (800) est égale ou supérieure à 200 kg/cm² et/ou sachant que la fraction de vide des deuxièmes minerais de fer (900) est supérieure à la fraction de vide des fers compactés (800) et/ou sachant que le taux de différenciation de réduction des fers compactés (800) est inférieur au taux de différenciation de réduction des deuxièmes minerais de fer (900) lors de la réduction des deuxièmes minerais de fer (900) conjointement avec les fers compactés (800).

4. Procédé selon l'une des revendications 1 à 3, sachant que la taille des fers compactés (800) est comprise dans une plage de 8 mm à 40 mm et/ou sachant que la taille des deuxièmes minerais de fer (900) est égale ou supérieure à 5 mm.

5. Procédé selon l'une des revendications 1 à 4, sachant que la fabrication des fers compactés (800) comprend en outre le concassage des fers compactés (800) après le compactage des premiers minerais de fer.

6. Procédé selon l'une des revendications 1 à 5, comprenant en outre la fourniture d'un gaz de réduction généré depuis le lit fixe de charbon à au moins un réacteur de réaction sélectionné dans un groupe constitué par le réacteur de réduction à lit fluidisé (20) et le réacteur de réduction à lit fixe (10).

7. Procédé de la revendication 6, comprenant en outre le refroidissement du gaz de réduction avant la fourniture du gaz de réduction au réacteur de réduction (10, 20).

8. Procédé selon l'une des revendications 6 à 7, comprenant en outre l'ajout, au gaz de réduction, d'un gaz de retour qui est généré en enlevant du dioxyde de carbone d'un gaz d'échappement évacué du réacteur de réduction à lit fluidisé (20) et du réacteur de réduction à lit fixe (10).

9. Procédé selon l'une des revendications 6 à 8, sachant que le gaz de réduction généré depuis le lit fixe de charbon est fourni au réacteur de réduction à lit fluidisé (20) et au réacteur de réduction à lit fixe (10).

10. Procédé de la revendication 8 ou 9, sachant que le gaz de retour comprend :
un premier gaz de retour qui est fourni au réacteur de réduction à lit fluidisé (20) ; et
un deuxième gaz de retour qui est fourni au réacteur de réduction à lit fixe (10).

11. Procédé de la revendication 10, sachant qu'une quantité du premier gaz de retour est supérieure à une quantité du deuxième gaz de retour et/ou sachant qu'une température du gaz de réduction fourni au réacteur de réduction à lit fluidisé (20) est inférieure à une température du gaz de réduction fourni au réacteur de réduction à lit fixe (10) et/ou sachant qu'une température du gaz de réduction fourni au réacteur de réduction à lit fluidisé (20) est égale ou supérieure à 700 °C et inférieure à 750 °C et/ou sachant qu'une température du gaz de réduction fourni au réacteur de réduction à lit fixe (10) est comprise dans une plage de 750 °C à 800 °C.

12. Procédé selon l'une des revendications 1 à 11, comprenant en outre l'injection d'un combustible auxiliaire dans le lit fixe de charbon via la tuyère (402).

13. Procédé de la revendication 12, sachant que le combustible auxiliaire est injecté dans le lit fixe de charbon pour être séparé de l'oxygène et/ou sachant que le combustible auxiliaire est un charbon fin qui est préséché pour avoir une humidité dont la teneur est égale ou inférieure à 1,0 % en poids et/ou sachant que le combustible auxiliaire est un charbon fin et une taille du charbon fin est égale ou inférieure à 3,0 mm et/ou sachant que le combustible auxiliaire est un gaz contenant un hydrocarbure.

14. Procédé selon l'une des revendications 1 à 13, comprenant en outre le chargement de minerais en granulat ou agglomérés dans le réacteur de réduction à lit fixe (10) et ensuite leur réduction.

15. Procédé selon l'une des revendications 1 à 14, sachant qu'un taux de réduction des premiers minerais de fer est égal ou supérieur à 45 % lors de la réduction des premiers minerais de fer et/ou sachant qu'un temps requis pour la réduction des fers compactés (800) conjointement avec les deuxièmes minerais de fer (900) dans le réacteur de réduction à lit fixe (10) est supérieur à un temps requis pour la réduction des premiers minerais de fer dans le réacteur de réduction à lit fluidisé (20).

16. Procédé selon l'une des revendications 1 à 15, sachant qu'une quantité des deuxièmes minerais de fer (900) est égale ou inférieure à quarante pour cent d'une somme des premiers et des deuxièmes minerais de fer (900) et/ou sachant qu'un taux de réduction des fers compactés (800) et des deuxièmes minerais de fer (900) est égal ou supérieur à soixante-dix pour cent lors de la réduction des fers compactés (800) et des deuxièmes minerais de fer (900).
